Europäisches Patentamt

European Patent Office

Office européen des brevets

(11) Veröffentlichungsnummer : **0 152 037**
**B1**

# (12) EUROPÄISCHE PATENTSCHRIFT

(45) Veröffentlichungstag der Patentschrift :
24.01.90

(21) Anmeldenummer : 85101096.7

(22) Anmeldetag : 02.02.85

(51) Int. Cl.⁵ : **B 29 C 43/38**// B29K101/10,
B29L31/34

(54) Verfahren und Vorrichtung zum Herstellen von Pressteilen aus duroplastischen Kunststoffen.

(30) Priorität : 13.02.84 DE 3405032

(43) Veröffentlichungstag der Anmeldung :
21.08.85 Patentblatt 85/34

(45) Bekanntmachung des Hinweises auf die Patenterteilung : 24.01.90 Patentblatt 90/04

(84) Benannte Vertragsstaaten :
AT BE CH DE FR GB IT LI NL SE

(56) Entgegenhaltungen :
DE--A-- 2 040 862
DE--A-- 2 515 948
US--A-- 2 633 603
US--A-- 2 730 766

(73) Patentinhaber : Licentia Patent-Verwaltungs-GmbH
Theodor-Stern-Kai 1
D-6000 Frankfurt/Main 70 (DE)

(72) Erfinder : Beenken, Rolf, Ing.
Rostocker Strasse 19
D-3257 Springe 1 (DE)

(74) Vertreter : Langer, Karl-Heinz, Dipl.-Ing. et al
Licentia Patent-Verwaltungs-GmbH Theodor-Stern-
Kai 1
D-6000 Frankfurt/Main 70 (DE)

## Beschreibung

Die Erfindung betrifft ein Verfahren zum Herstellen von Preßteilen nach dem Oberbegriff des Patentanspruches 1 sowie eine Vorrichtung zur Durchführung des Verfahrens.

Aus der DE-A 25 15 948 ist ein Verfahren bekannt, mit dem sich in einem aus Preßmatrize, Preßstempel und einem Schnittstempel als Auswerfer bestehenden Formwerkzeug verformbare Halbzeuge zu Fertigteilen ohne zusätzliche Bearbeitungsvorgänge umformen lassen. Das unkalibrierte Halbzeug wird in die geöffnete Preßmatrize eingebracht und unter hohem Druck zu maßgenauen Teilen geprägt, wobei überschüssiger Werkstoff beim Umformen verdrängt und durch seitliche Abflußkanäle in der Preßmatrize abfließen kann. Beim anschließenden Ausstoßen des Teiles wird der überschüssige Werkstoff durch den Schnittstempel abgeschnitten. Das bekannte Formwerkzeug eignet sich überwiegend für metallische Werkstoffe, die als solche eine gleichmäßige Dichte aufweisen. Zum Herstellen von Preßteilen, bei denen neben der Formgebung eine erhebliche Volumenreduzierung der Formmasse und eine Verfestigung durch Zustandsänderung erforderlich sind, können das bekannte Umformverfahren und das entsprechende Formwerkzeug kaum eingesetzt werden.

Es ist weiterhin bekannt, duroplastische Kunststoff-Formmassen nach DIN 7708 in geschlossenen, teilbaren Formwerkzeugen durch Druckanwendung und Wärmebehandlung zu Formteilen zu pressen. (z. B. « Kunststoff-Handbuch, Band X, Carl Hanser Verlag, München 1968 », Seiten 636 bis 639, sowie Seiten 682 und 683) Dabei wird die aus Formgesenk und Oberstempel bestehende Preßform im offenen Zustand mit Formmasse in abgemessener Menge beschickt. Nach dem Schließen der Preßform füllt die plastische Masse unter Preßdruck fließend den Formhohlraum aus und erstarrt zum Formteil. Zum sicheren Verdichten der Masse im Formhohlraum muß mit Materialüberschuß gearbeitet werden. Dieser dringt als fließende Masse in die Trennebene zwischen die Werkzeugteile und es entsteht Funktionsbedingt ein Preßgrat. Je nach Aufbau der Formwerkzeuge und der Anordnung ihrer Trennflächen entsteht Preßgrat von unterschiedlicher Dicke. Dieser ist mit großem Aufwand von Hand oder bei kleineren Formteilen und dünnem Grat auch maschinell zu entfernen. Beim maschinellen Entgraten besteht jedoch eine erhebliche Beschädigungsgefahr insbesondere an dünnen Rippen und Stegen durch das mit hohem Druck aufschlagende Entgratungsgranulat. Nachteilig ist auch die oft unterschiedliche Verdichtung der Preßteile, die ihre Ursache im von vornherein zu großen Werkzeugspalt oder im Verschleiß des Formwerkzeuges und dem damit verbundenen dickeren Preßgrat, oder im unterschiedlichen Fließverhalten der Formmasse haben kann. Dadurch werden Werkzeughohlräume nicht voll ausgefüllt und es entstehen Fehlstellen am Preßteil. Ungleichmäßig ausgepreßte und verdichtete Teile unterliegen zudem während der natürlichen Alterung einem erheblichen Verzug.

Es ist Aufgabe der Erfindung, das eingangs genannte Herstellungsverfahren für Preßteile so zu verbessern, daß duroplastische Formteile mit optimaler Verdichtung gratfrei und ohne wesentliche Nacharbeit aus der Preßform entnehmbar sind bzw. ausgeworfen werden. Weiterhin besteht die Aufgabe darin, eine Vorrichtung zur Durchführung des Verfahrens aufzuzeigen, mit der sich aufgrund leicht möglicher Anpassung des Forminnendruckes neben der Gratfreiheit fehlerfreie, gleichmäßig verdichtete und verzugsarme Preßteile formen lassen, die insbesondere als Gehäuseteile elektrotechnicher Geräte Verwendung finden sollen.

Diese Aufgabe wird erfindungsgemäß bei dem genannten Verfahren durch die kennzeichnenden Merkmale des Anspruchs 1 gelöst. Die gezielte Anordnung der Austriebsöffnungen ist dabei abhängig vom Preßteil und seiner Lage im Formgesenk. Wesentlich ist, daß die Austriebsöffnungen nahe der Stellen größter Masseanhäufung abzweigen, da dort die Formmasse am längsten plastisch ist und zuletzt erstarrt. Durch Querschnittsveränderung der Austriebsöffnungen läßt sich der Strömungswiderstand der Formmasse ändern und eine Steuerung des Forminnendruckes herbeiführen.

Eine Vorrichtung zur Durchführung dieses Verfahrens ist in Anspruch 2 angegeben; besondere Ausführungsarten dieser Vorrichtung beinhalten die Ansprüche 3 bis 8.

Bei der Vorrichtung zur Durchführung des Verfahrens ist der Oberstempel spielfrei in einem Formrahmen des Formgesenks eingepaßt und einer oder mehrere seitliche Austriebskanäle mit etwa in Höhe der in Preßrichtung liegenden Oberseite des Preßteiles befindlichen Öffnungen sind im Formrahmen ausgespart. Dabei ist die Öffnungsunterkante jedes Austriebskanals in ihrer Lage zur aktiven Seite des Oberstempels sowie zu einem im Formrahmen gehaltenen aktiven Unterteil einstellbar, wobei vorzugsweise ein Abstand von etwa 0,1 bis 0,5 mm unterhalb der die fertige Oberseite des Preßteiles bildenden aktiven Seite des Oberstempels vorgesehen ist. Weiterbildungen der Erfindung sind in Unteransprüchen angegeben.

Das erfindungsgemäße Verfahren hat den Vorteil, daß zwar weiterhin mit Masseüberschuß gepreßt werden kann, dieser aber nicht in den in der Trennebene zwischen den Werkzeugteilen bisher funktionsbedingt vorhandenen Spalt einfließt und dort als Preßgrat erstarrt, sondern vielmehr durch Austriebskanäle austritt. An der jeweiligen Öffnung wird beim Entformen bzw. Auswerfen des fertigen Preßteiles der Austrieb abgeschert und durch das Eigengewicht oder eine Absaugung entfernt. Die Preßteile kommen somit gratfrei aus dem Preßwerkzeug, da sich aufgrund der Spielfreiheit zwischen Oberstempel und Formrahmen kein weiterer Preßgrat mehr bilden kann. Zudem läßt sich über eine Größenänderung des Austriebsquerschnittes sehr einfach eine Anhebung oder Absenkung des Strömungswiderstandes der plastifizierten Formmasse erreichen und so die Verdichtung eines bestimmten Preßteiles abhängig von der verwendeten Formmasse optimieren. Auch dünne Stege werden auf diese Weise ausgefüllt und gut verdichtet. Durch Lage und Größe des Austriebsspaltes kann weiterhin dem Verzug entgegengewirkt werden. Ebenso lassen sich Änderungen im Verarbeitungsverhalten der Formmassen nachträglich gezielt ausgleichen. Zudem wird weniger Formmasse beim Dosieren benötigt, um die Dichte und Qualitätsanforderungen zu erfüllen, da die bisher übliche Überdosierung sich durch das Verfahren minimieren läßt.

Die Erfindung ist nachstehend anhand der Zeichnung an einem Ausführungsbeispiel näher erläutert.

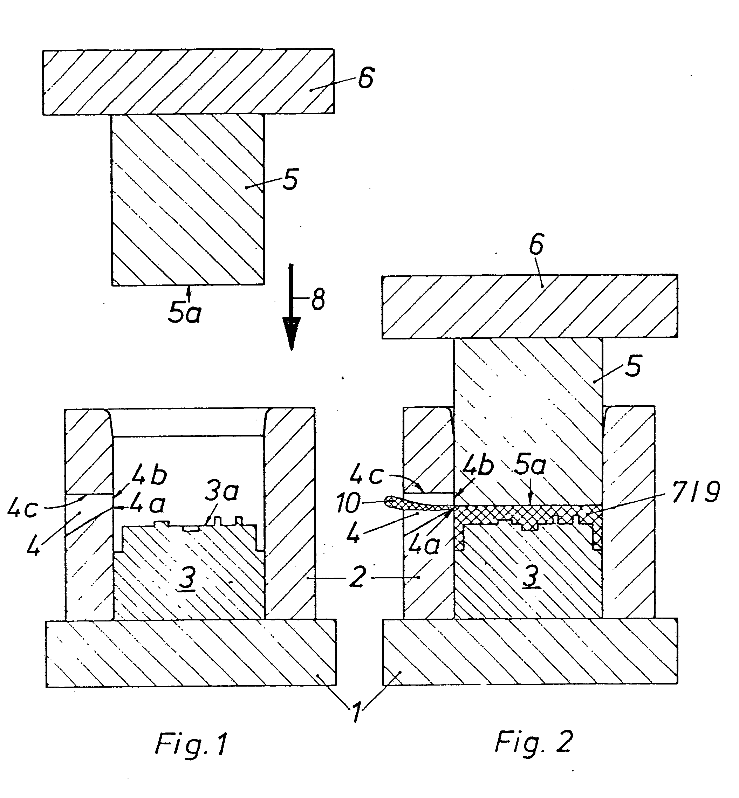

Fig. 1 zeigt vereinfacht einen Querschnitt durch eine offene Preßform, während in

Fig. 2 die Preßform im geschlossenen Zustand mit der zum Formteil erstarrenden Preßmasse dargestellt ist.

Die nur mit prinzipiellen Merkmalen gezeigte Preßform trägt auf einer Grundplatte 1 ein aus einem Formrahmen 2 und einem darin eingesetzten aktiven Unterteil 3 gebildetes Formgesenk. Im Formrahmen ist ein schlitzförmiger, seitlich abzweigender Austriebskanal 4 ausgespart, auf dessen Anordnung und Funktion noch näher eingegangen wird. Verschließbar ist die Form durch einen Oberstempel 5, der seinerseits an einer kopfplatte 6 befestigt ist. Der Oberstempel greift mit seiner Kontur spielfrei in den Formrahmen ein, so daß aus dem die Formmasse aufnehmenden Formhohlraum 7 kein Material am Oberstempel vorbei entgegen der durch einen Pfeil 8 angedeuteten Preßrichtung austreten kann. Nicht gezeigt sind Auswerfer zum Entformen des fertigen Preßteiles, die Heizeinrichtung für die Form und die erforderlichen Aufspannplatten zum Befestigen der Preßform in einer Presse. Ebenfalls nicht gezeigt sind Aufschlagstücke, die nach dem Einfahren des Oberstempels in den Formrahmen den Abstand zum Unterteil begrenzen und damit zur Maßgenauigkeit des Preßteiles in Preßrichtung beitragen.

Bei jedem Arbeitstakt wird das offene Formgesenk mit Formmasse in abgemessener Menge, beispielsweise durch automatisches Dosieren von pulverigem Material oder durch Tabletten beschickt. Zum Schließen der Preßform wird der Oberstempel eingefahren und unter der Wirkung des Preßdruckes sowie der Wärme der beheizten Preßform wird die Formmasse plastifiziert. Diese fließt dabei in die Formholräume und erstarrt zum Preßteil 9, beispielsweise einer andeutungsweise im Querschnitt gezeigten Gehäuseschale eines Leitungsschutzschalters. Für ein solches Preßteil nimmt zweckmäßigerweise die aktive Seite 3a des Unterteils die großen Konturensprünge auf, während die aktive Seite 5a des Oberstempels nahezu eben ausgebildet ist.

Die Lage des in Preßrichtung eine etwa 3 mm hohe Öffnung 4b aufweisenden Austriebskanals 4 ist nun so gewählt, daß seine Öffnungsunterkante 4a etwa 0,1 bis 0,5 mm unterhalb der aktiven Seite 5a des Oberstempels bei geschlossener Preßform befindlich ist. Hierdurch bleibt während des Preßvorganges ein Spalt bzw. Schlitz offen, durch den die überschüssige Formmasse als Austrieb 10 austreten kann. Die einzustellende Spaltgröße oberhalb der Kante 4a in den angegebenen Grenzen ist abhängig von der Größe und Form des Preßteiles sowie der Anzahl und Breite der Austriebskanäle und der Art der Formmasse. Bei Gehäuseschalen für Leitungsschutzschalter aus Formmasse vom Typ 131 bzw. Typ 183 hat sich ein einseitiger Austriebskanal mit einem Spalt von etwa 0,2 mm Höhe bei einer Breite von etwa 30 mm, zweckmäßigerweise an einer geradlinigen Außenkante, als funktionsgerecht erwiesen. Dabei erhält man Preßteile mit guter Verdichtung und es wird ein optimales Ausfüllen dünner Stege erreicht.

Die teilweise Überdeckung des zwischen der Unterkante 4a und einer Oberseite 4c liegenden Öffnungsquerschnittes des Austriebskanals durch die Kontur des Oberstempels ermöglicht eine gute Entlüftung des Formhohlraumes beim Schließen der Preßform. Aus diesem Grund ist der Öffnungsquerschnitt in der Höhe um ein mehrfaches größer gehält als der letztendlich verbleibende Austriebsspalt während der Plastifizierungs- und Aushärtephase. Ist letztere abgeschlossen, so wird nach Öffnen der Form das Preßteil durch die nicht gezeigten Auswerfer aus dem Formgesenk herausgefahren und zugleich der Austrieb 10 an der Oberseite 4c des Austriebskanals abgeschert. Der abgescherte Austrieb fällt aufgrund des Eigengewichtes in dem keilförmig sich nach unten erweiternden Austriebskanal aus dem Formgesenk heraus und kann zusätzlich abgesaugt werden. Das eigentliche Preßteil aus dem Formhohlraum 7 ist somit vollkommen gratfrei und bedarf praktisch keiner weiteren Nachbearbeitung.

Da von der Lage und Größe der Schlitze für den Austrieb der Strömungswiderstand der plastifizierten Formmasse abhängt, läßt sich über eine Änderung des Austriebsquerschnittes der Formninnendruck steuern und damit eine optimale Preßqualität erreichen. Um dieser Forderung nachzukommen, kann auch nach Fertigstellung der Preßform die Höhe des Austriebsschlitzes noch sehr einfach variiert werden, indem die Lage des Unterteiles 3 und des Oberstempels 5 zum Austriebskanal durch einfach an der Preßform vorzunehmende werkzeugübliche Maßnahmen geändert wird. Bei letzterer sind zudem zweckmäßigerweise die beim Verschließen aktiven Werkzeugteile aus Hartmetall hergestellt, damit die Spielfreiheit insbesondere zwischen Formrahmen und Oberstempel auf Dauer erhalten bleibt. Im Gegensatz zu den üblicherweise verwendeten Werkzeugstählen entsteht so fast kein von der Wärmeausdehnung abhängiges veränderliches Spiel, und Verschleiß zwischen Oberstempel 5 und Unterteil 3 wird vermieden, so daß gratfreie Preßteile mit optimaler Verdichtung hergestellt werden können.

**Patentansprüche**

1. Verfahren zum Herstellen von Preßteilen (9), bei dem Formmasse in ein Formgesenk (2/3) einer geöffneten Preßform eingebracht und anschließend durch Zufahren eines in das Formgesenk spielfrei gleitend eingreifenden Oberstempels (5) unter Druck umgeformt wird, wobei überschüssige Formmasse einen Preßgrat (10) bildet, der durch seitlich im Formgesenk (2) gezielt abzweigende Austriebsöffnungen (4/4b) ausgetrieben und beim Entformen an der jeweiligen zum Preßteil (9) hin liegenden Innenkante der Austriebsöffnung (4/4b) abgeschert wird, dadurch gekennzeichnet, daß als Formmasse ein duroplastischer Kunststoff im Formgesenk (2/3) unter Druck- und Wärmeeinwirkung plastifiziert und ausgehärtet wird, und daß mittels einstellbarer Querschnittsveränderung der Austriebsöffnungen (4/4b) eine Änderung des Strömungswiderstandes der plastifizierten Formmasse und dadurch eine Steuerung des Forminnendruckes herbeigeführt ist.

2. Vorrichtung zur Durchführung des Verfahrens nach Anspruch 1 mit einem aus einem Formrahmen (2) und einem Formunterteil (3) bestehenden und beheizten Formgesenk, einem in dem Formgesenk (2/3) zum Druckaufbau gleitenden beheizten Oberstempel (5) und mit etwa senkrecht zur Preßrichtung (Pfeil 8) seitlich im Formrahmen (2) angeordneten Austriebskanälen (4) zum Abfließen überschüssiger Formmasse, dadurch gekennzeichnet, daß die Querschnittsflächen der Austriebsöffnungen (4b) zur Beeinflussung des Forminnendruckes dienen sowie ggf. einstellbar sind und das die zum Preßteil (9) hin liegende Innenkante der Austriebsöffnungen (4b) als Abscherkante für die ausgehärtete überschüssige Formmasse (10) ausgebildet ist.

3. Vorrichtung nach Anspruch 2, dadurch gekennzeichnet, daß die Öffnungsunterkante (4a) jeder Austriebsöffnung (4b) in ihrer Lage zur aktiven Seite (5a) des Oberstempels (5) sowie zu dem im Formrahmen (2) gehaltenen aktiven Unterteil (3) einstellbar und bei zugefahrenem Oberstempel (5) abhängig vom erforderlichen Druckaufbau für ein bestimmtes Preßteil etwa bei 0,1 bis 0,5 mm unterhalb der die fertige Oberseite des Preßteiles (9) bildenden aktiven Seite (5a) des Oberstempels (5) befindlich ist.

4. Vorrichtung nach Anspruch 2 und 3, dadurch gekennzeichnet, daß die Austriebskanäle (4) mit den zugehörigen Öffnungen (4b) lediglich einseitig angeordnet sind.

5. Vorrichtung nach einem der Ansprüche 2 bis 4, dadurch gekennzeichnet, daß bei einer Austriebsöffnung (4b) ihre Breite etwa 10 % des in Preßebene liegenden Umfangs des zu fertigenden Preßteiles (9) beträgt.

6. Vorrichtung nach einem der Ansprüche 2 bis 5, dadurch gekennzeichnet, daß sich an die Austriebsöffnungen (4b) jeweils ein keilförmiger Austriebskanal (4) vom Formhohlraum (7) ausgehend anschließt.

7. Vorrichtung nach Anspruch 6, dadurch gekennzeichnet, daß die Oberseite (4c) des Austriebskanals (4) etwa senkrecht und seine Unterseite unter einem Winkel von etwa 10° bis 20° zur Preßrichtung (Pfeil 8) schräg nach außen verlaufend angeordnet sind.

8. Vorrichtung nach einem der Ansprüche 2 bis 7, dadurch gekennzeichnet, daß die zum Verschließen der Preßform dienenden aufeinander gleitenden Teile des Oberstempels (5) und des Formrahmens (2) aus Hartmetall hergestellt sind.

**Claims**

1. Method for the production of pressed parts (9), in which method moulding mass is introduced into a former (2/3) of an opened mould and subsequently reshaped under pressure through forward travel of an upper die (5) slidingly engaging free of play into the former, wherein excess moulding mass forms a press flash (10), which is driven out through escape openings (4/4b) branching off in targeted manner laterally in the former and which on removal from the mould is sheared off at the respective inside edge of the escape opening (4/4b) lying towards the pressed part (9), characterised thereby, that a thermosetting synthetic material is plasticised and set as moulding mass under the influence of pressure and heat in the former (2/3) and that a change in the flow resistance of the plasticised moulding mass and thereby a control of the internal mould pressure is brought about by means of adjustable cross-sectional variation of the escape openings (4, 4b).

2. Device for the performance of the method according to claim 1 with a heated former consisting of a mould frame (2) and a lower mould part (3), a heated upper die (5) sliding in the former (2/3) for pressure build-up and with escape channels (4) arranged laterally in the mould frame (2) and about perpendicularly to the pressing direction (arrow 8) for the outlflow of excess moulding mass, characterised thereby, that the cross-sectional areas of the escape openings (4b) serve for the influencing of the internal mould pressure as well as are in a given case adjustable and that the respective inside edge of the escape openings (4b) lying towards the pressed part (9) is constructed as shearing edge for the set excess moulding mass (10).

3. Device according to claim 2, characterised thereby, that the lower opening edge (4a) of each escape opening (4b) is adjustable in its position relative to the active side (5a) of the upper die (5) as well as relative to the active lower part (3) held in the mould frame (2) and, with the upper die (5) moved forward and in dependence on the required pressure build-up for a certain press part, is situated at about 0.1 to 0.5 millimetres below the active side (5a) of the upper die (5) forming the finished upper side of the pressed part (9).

4. Device according to claim 2 and 3, characterised thereby, that the escape channels (4) with the associated openings (4b) are arranged merely at one side.

5. Device according to one of the claims 2 to 4, characterised thereby, that in the case of one escape opening (4b), its width amounts to about 10 % of that circumference of the pressed part (9) to be produced, which lies in the plane of pressing.

6. Device according to one of the claims 2 to 5, characterised thereby, that a respective wedge-shaped escape channel (4) starting out from the hollow mould space (7) adjoins each of the escape openings (4b).

7. Device according to claim 6, characterised thereby, that the upper side (4c) of the escape channel (4) is arranged to extend outwardly about perpendicularly to the pressing direction (arrow 8) and its underside is arranged to extend outwardly inclined at an angle of about 10° to 20° to the pressing direction (arrow 8).

8. Device according to one of the claims 2 to 7, characterised thereby, that those parts of the upper die (5) and of the mould frame (2), which slide one on the other and serve for the closing of the mould, are made of hard metal.

**Revendications**

1. Procédé pour fabriquer des objets pressés (9), dans lequel la masse moulable est introduite dans une matrice de moulage (2/3) d'un moule ouvert, puis déformée sous pression par l'introduction d'un poinçon supérieur (5) descendant en glissant sans jeu, la masse moulable en excès formant une ligne de bavure (10) qui est expulsée par des orifices de moule (4/4b) judicieusement prévus sur le côté de la matrice et qui est tranchée lors du démoulage à l'endroit du côté intérieur de l'orifice de moule (4/4b) se trouvant vers l'objet pressé (9), caractérisé en ce que la masse moulable qui est une matière synthétique thermodurcissable est plastifiée et durcie dans la matrice (2/3) sous l'action de la pression et de la chaleur, et que, en modifiant de manière réglable la section des orifices de sortie (4/4b), on réalise une modification de la résistance d'écoulement de la masse moulable plastifiée et dès lors une commande de la pression intérieure du moule.

2. Dispositif pour l'exécution du procédé selon la revendication 1, avec une matrice de moulage consistant en un châssis de moule (2) et une partie inférieure de moule (3) qui est chauffée, un poinçon supérieur (5) glissant, chauffé, et assurant la pression, et des canaux de sortie (4) autant dire perpendiculaires à la direction de pressage (flèche 8) prévus latéralement dans le châssis de moule (2) pour l'évacuation de la masse moulable excédentaire, caractérisé en ce que les surfaces des sections des orifices (4b) servent à influencer la pression intérieure du moule et sont éventuellement réglables et que le côté intérieur des orifices (4b) se trouvant vers l'objet pressé (9) est conçu comme bord de tranchage de l'excès de masse moulable (10).

3. Dispositif selon la revendication 2, caractérisé en ce que la position du côté inférieur (4a) de chaque orifice (4b) par rapport au côté actif (5a) du poinçon supérieur (5) ainsi que par rapport à la partie inférieure active (3) maintenue dans le châssis de moule (2) est réglable et se trouve, lorsque le poinçon supérieur (5) est introduit, à environ 0,1 à 0,5 mm en dessous du côté actif (5a) formant la partie supérieure finie de l'objet moulé (9), selon l'établissement de pression nécessaire pour un objet pressé déterminé.

4. Dispositif selon les revendications 2 et 3, caractérisé en ce que les canaux de sortie (4) avec leurs orifices (4b) correspondants ne sont prévus que d'un seul côté.

5. Dispositif selon l'une des revendications 2 à 4, caractérisé en ce que, pour un orifice de sortie (4b), la largeur est égale à environ 10 % de la dimension se trouvant dans le plan de pressage de l'objet pressé (9) à produire.

6. Dispositif selon l'une des revendications 2 à 5, caractérisé en ce qu'un canal de sortie (4) en forme de coin, partant du creux de moule (7), est raccordé à chaque orifice du moule (4b).

7. Dispositif selon la revendication 6, caractérisé en ce que la partie supérieure (4c) du canal de sortie (4) est prévue environ perpendiculaire, sa partie inférieure s'étendant obliquement vers l'extérieur sous un angle d'environ 10° à 20° par rapport à la direction de pressage (flèche 8).

8. Dispositif selon l'une des revendications 2 à 7, caractérisé en ce que les parties du poinçon supérieur (5) glissant l'une sur l'autre qui servent à la fermeture du moule et le châssis de moule (2) sont fabriqués en métal dur.

Fig. 1

Fig. 2